# EUROPEAN PATENT APPLICATION

(11) **EP 1 662 350 A2**
(43) Date of publication of application: **31.05.2006**
(21) Application number: 05024648.7
(22) Date of filing: 11.11.2005
(51) Int. Cl.: G05B 19/4062, G05B 19/39

(54) **Driving control apparatus**

(30) Priority: 29.11.2004 JP 2004344080
(71) Applicant: FANUC LTD, Minamitsuru-gun, Yamanashi 401-0597 (JP)
(72) Inventor: Taniguchi, Mitsuyuki, Gotenba-shi, Shizuoka 412-0045 (JP); Kikuchi, Hirofumi Room 8-201 Fanuc Manshonharimomi, Minamitsuru-gun, Yamanashi 401-0511 (JP); Horiuchi, Hiromichi, Fujiyoshida-shi, Yamanashi 403-0006 (JP)
(74) Representative: Thum, Bernhard

(57) **Abstract**

A driving control apparatus that can judge whether there is any abnormality in the operation of an acceleration sensor as well as in the mounting direction thereof. The driving control apparatus which controls the operation of a driven part via a driving device is constructed to include an abnormality judging circuit which, based on acceleration information from the acceleration sensor, judges the presence or absence of an abnormality in the operation of the acceleration sensor or the mounting thereof with respect to the driven part, in addition to a position sensor or velocity sensor which detects the position or velocity of the driven part and the acceleration sensor which detects the acceleration of the driven part separately from the position sensor or velocity sensor. When judging information supplied from the abnormality judging circuit indicates the presence of an abnormality, the operation of the driven part is controlled, without using the acceleration information from the acceleration sensor, based on the position or velocity detected by the position sensor or velocity sensor.

## Description

### BACKGROUND OF THE INVENTION

### 1. Field of the Invention

The present invention relates to a driving control apparatus for controlling the operation of a driven part via a driving device.

### 2. Description of the Related Art

In a control apparatus for controlling a driving device that drives a driven part, it is practiced to control the position or velocity of the driven part by sensing its position or velocity. Further, the Applicant has proposed in a pending patent application to provide an acceleration sensor separately from the position sensor or velocity sensor and to control the acceleration (or deceleration) of the driven part by sensing its acceleration. This acceleration sensor may include means for detecting abnormal vibration of the driven part, but does not include means for detecting an abnormality in itself or in its mounting direction.

Accordingly, if the acceleration sensor is broken, proper acceleration information cannot be obtained, and the operation of the driven part may become unstable. Further, if the acceleration detection direction of the acceleration sensor is not aligned with the moving direction of the driven part, then again proper acceleration information cannot be obtained, and the operation of the driven part may become unstable. The resulting abnormal behavior of the driven part can lead to the breakage of the driven part, etc.

### SUMMARY OF THE INVENTION

The present invention has been devised in view of the above problem, and an object of the invention is to contribute to enhancing the safety of a driving system by providing a driving control apparatus that can judge, based on the acceleration information detected by an acceleration sensor, whether the acceleration sensor is operating normally and whether the mounting direction of the acceleration sensor is correct or not.

To achieve the above object, according to the present invention, there is provided a driving control apparatus for controlling operation of a driven part via a driving device, comprising: position or velocity detecting means for detecting position or velocity of the driven part; acceleration detecting means, mounted on the driven part, for detecting acceleration of the driven part separately from the position or velocity detecting means; and judging means for judging, based on acceleration information from the acceleration detecting means, the presence or absence of an abnormality in the operation of the acceleration detecting means or the mounting thereof with respect to the driven part.

In one preferred mode, the judging means is included in a signal processing circuit provided within a driving control apparatus main unit.

Alternatively, the judging means is formed on the same circuit on which the acceleration detecting means is formed.

In one preferred mode, the driving control apparatus further comprises notifying means for notifying an operator by outputting information concerning the abnormality based on judging information supplied from the judging means.

In one preferred mode, when the judging information from the judging means indicates the presence of an abnormality, the driving control apparatus controls the operation of the driven part, without using the acceleration information from the acceleration detecting means, based on the position or velocity detected by the position or velocity detecting means.

Alternatively, when the information from the judging means indicates the presence of an abnormality, the driving control apparatus stops the operation of the driven part.

In one preferred mode, the acceleration detecting means detects accelerations X, Y, and Z in three mutually perpendicular axes, and the judging means judges that there is an abnormality if the value of any one of the accelerations X, Y, and Z is outside a predetermined range.

Alternatively, the acceleration detecting means detects accelerations X, Y, and Z in three mutually perpendicular axes, and the judging means performs a calculation (X² + Y² + Z²)^{1/2} using the values of the accelerations, and judges that there is an abnormality if a value obtained from the calculation is outside a predetermined range.

Alternatively, the acceleration detecting means detects accelerations X, Y, and Z in three mutually perpendicular axes, and the judging means performs a calculation X + Y + Z using the values of the accelerations, and judges that there is an abnormality if a value obtained from the calculation is outside a predetermined range.

In one preferred mode, the judging means averages calculated values obtained by performing a prescribed calculation using output values of the acceleration detecting means over a predetermined period of time, and judges that there is abnormality if an average value obtained by the averaging is outside a predetermined range.

Alternatively, the judging means judges that there is an abnormality if a condition in which a value obtained by performing a prescribed calculation using output values of the acceleration detecting means is outside a predetermined range has continued for more than a predetermined length of time.

In the thus configured driving control apparatus according to the present invention, the safety of the driving system is enhanced because it can be judged, based on the acceleration information detected by the acceleration detecting means, whether the acceleration sensor is operating normally and whether the mounting direction of the acceleration sensor is correct or not.

### BRIEF DESCRIPTION OF THE DRAWINGS

Further features and advantages of the present invention will be apparent from the following description with reference to the accompanying drawings, in which:
Figure 1 is a block diagram showing one example of a system to which a driving control apparatus according to the present invention is applied;
Figure 2 is a block diagram showing the details of the signal processing performed within an apparatus main unit in a prior art driving control apparatus;
Figure 3 is a block diagram showing the details of the signal processing performed within the apparatus main unit in one embodiment of the driving control apparatus according to the present invention; and
Figure 4 is a block diagram showing the details of the signal processing performed within the apparatus main unit in another embodiment of the driving control apparatus according to the present invention.

### DETAILED DESCRIPTION

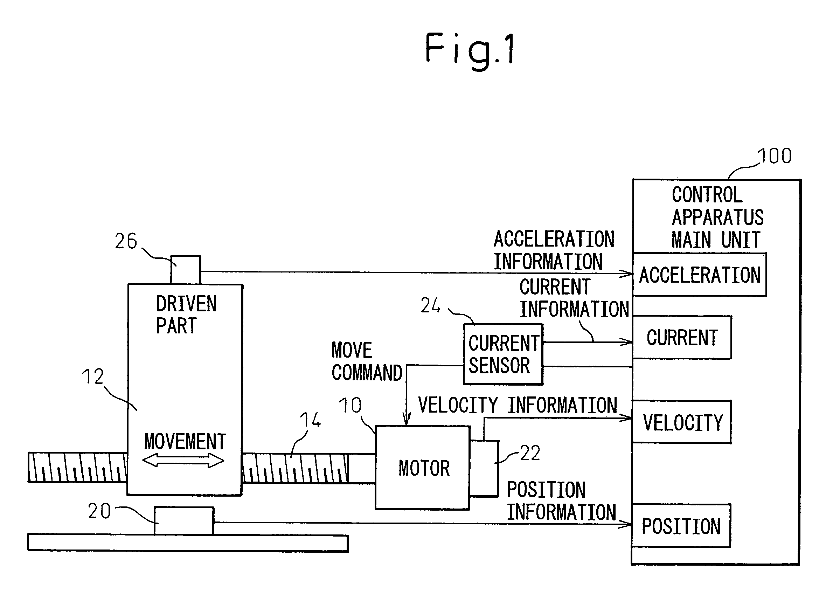

Embodiments of the present invention will be described below with reference to the accompanying drawings. Figure 1 is a block diagram showing one example of a system to which a driving control apparatus according to the present invention is applied. In the figure, a motor 10 as a driving device rotates a ballscrew 14 to thereby cause a driven part 12 to move rectilinearly. The driving control apparatus comprises a control apparatus main unit 100, a position sensor 20, a velocity sensor 22, a current sensor 24, and an acceleration sensor 26.

The position sensor 20 is a scale that detects the position of the driven part 12 along its path and outputs the position detection value as position information. The velocity sensor 22 is attached the motor 10, and detects the velocity of the driven part 12 and outputs the velocity detection value as velocity information. The current sensor 24 detects the current flowing in the motor 10 and outputs the current detection value as current information. The acceleration sensor 26 detects accelerations in three mutually perpendicular axes and outputs the acceleration detection value as acceleration information. Based on the detected position information, velocity information, current information, and acceleration information, a signal processing circuit in the control apparatus main unit 100 calculates a move command value for the motor 10 and outputs it as a drive command to the driving device.

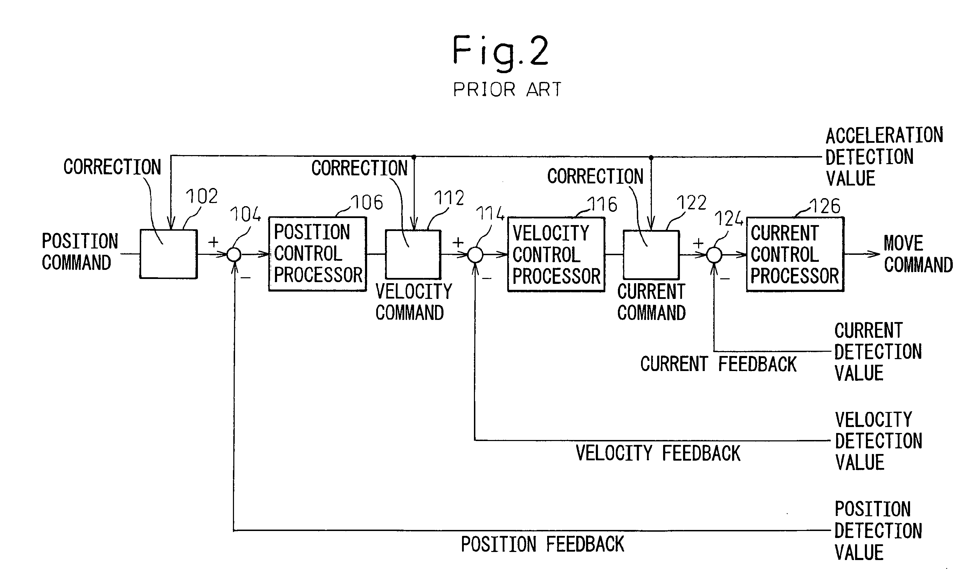

Here, to facilitate understanding of the present invention, one example of the prior art will be described. Figure 2 is a block diagram showing the details of the signal processing performed within the apparatus main unit in a prior art driving control apparatus. As shown in the figure, the control system comprises three feedback control loops: a position control loop, a velocity control loop, and a current control loop. More specifically, an externally supplied position command value is input via a correction circuit 102 to an adder 104 where it is compared with the position detection value to calculate a position deviation which is supplied to a position control processor 106. The position control processor 106 outputs a velocity command value by calculating it, for example, through proportional-integral (PI) control based on the position deviation.

Next, the velocity command value is input via a correction circuit 112 to an adder 114 where it is compared with the velocity detection value to calculate a velocity deviation which is supplied to a velocity control processor 116. The velocity control processor 116 outputs a current command value by calculating it, for example, through proportional-integral (PI) control based on the velocity deviation. Next, the current command value is input via a correction circuit 122 to an adder 124 where it is compared with the current detection value to calculate a current deviation which is supplied to a current control processor 126. The current control processor 126 outputs a move command signal to the motor 10 by calculating it, for example, through proportional-integral (PI) control based on the current deviation.

Here, the correction circuits 102, 112, and 122 are respectively provided to correct the position command value, velocity command value, and current command value based on the acceleration detection value in order to control the acceleration (or deceleration) of the driven part 12.

As previously described, there has been the problem that, if there is any abnormality in the operation or the mounting direction of the acceleration sensor 26, proper acceleration information cannot be obtained, and the operation of the driven part 12 may become unstable, leading, in the worst case, to abnormal behavior of the driven part 12. In view of this, the present invention aims to provide a driving control apparatus that can detect the presence or absence of such an abnormality.

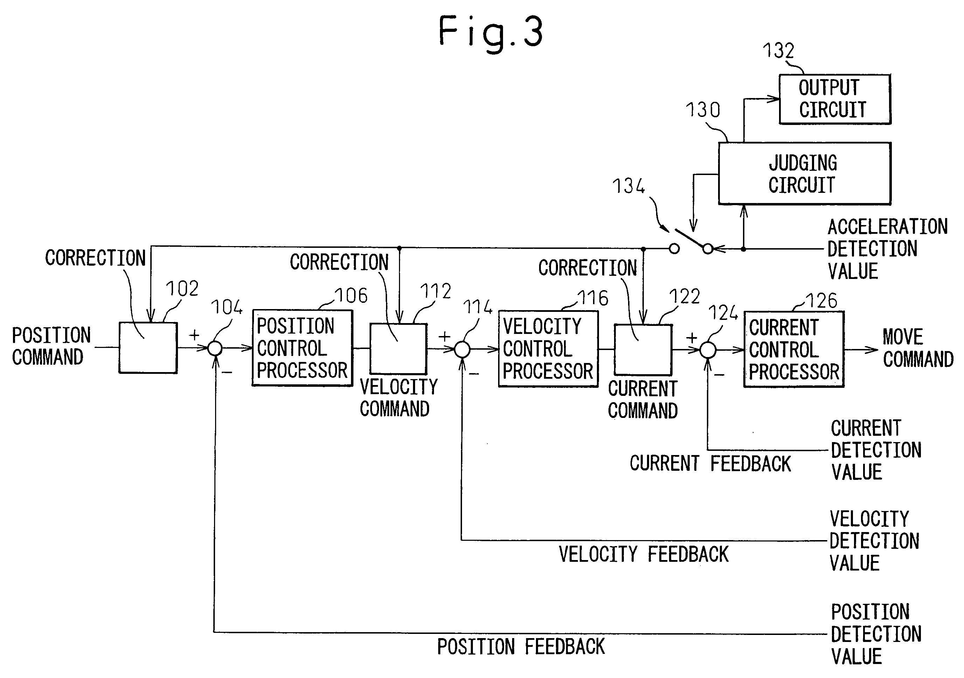

Figure 3 is a block diagram showing the details of the signal processing performed within the apparatus main unit in one embodiment of the driving control apparatus according to the present invention. As shown in the figure, as in the processing shown in Figure 2, this embodiment also comprises three feedback control loops, that is, the position control loop, the velocity control loop, and the current control loop; here, the same component elements as those described above are designated by the same reference numerals, and the description of such component elements will not be repeated herein.

In this embodiment, the signal processing circuit in the control apparatus main unit 100 contains an abnormality judging circuit 130, an abnormality information output circuit 132, and an acceleration information shut-off switch 134 relating to the acceleration information.

The abnormality judging circuit 130 judges the presence or absence of abnormality in the acceleration sensor 26 that detects accelerations in three mutually perpendicular axes. More specifically, when power is turned on, with the driven part 12 left stationary, the abnormality judging circuit 130 judges the presence or absence of abnormality based on the acceleration detection value output from the acceleration sensor 26 by checking whether the Earth's gravitational acceleration is detected normally and whether the acceleration sensor is mounted correctly with respect to the direction of gravity. Further, during the operation of the driven part 12, the abnormality judging circuit 130 judges the presence or absence of an abnormality based on the relationship between the position command value and the acceleration detection value.

That is, when the acceleration sensor 26 detects the accelerations X, Y, and Z in the three mutually perpendicular axes, the abnormality judging circuit 130 judges that there is an abnormality if the value of any one of the accelerations X, Y, and Z is outside a predetermined range.

Alternatively, when the acceleration sensor 26 detects the accelerations X, Y, and Z in the three mutually perpendicular axes, the abnormality judging circuit 130 performs the calculation (X² + Y² + Z²)^{1/2} using the values of the accelerations, and judges that there is an abnormality if the calculated value is outside a predetermined range.

Further alternatively, when the acceleration sensor 26 detects the accelerations X, Y, and Z in the three mutually perpendicular axes, the abnormality judging circuit 130 performs the calculation X + Y + Z using the values of the accelerations, and judges that there is an abnormality if the calculated value is outside a predetermined range.

Further, the abnormality judging circuit 130 may be configured to average over a predetermined period of time the calculated values obtained by performing a prescribed calculation such as described above using the output values of the acceleration sensor 26, with provisions made to judge that there is an abnormality if the average value is outside a predetermined range. This serves to enhance the reliability of the judgment.

Alternatively, the abnormality judging circuit 130 may be configured to judge that there is an abnormality if the condition in which the calculated value obtained by performing a prescribed calculation using the output values of the acceleration sensor 26, such as described above, is outside the predetermined range has continued for more than a predetermined length of time. This also serves to enhance the reliability of the judgment.

If it is judged that there is an abnormality in the operation or the mounting direction of the acceleration sensor 26, the abnormality judging circuit 130 performs control to produce an indication via the abnormality information output circuit 132 to indicate the state of the abnormality and thereby notify the operator of the occurrence of the abnormality. Further, the abnormality judging circuit 130 controls the acceleration information shut-off switch 134 to prevent the acceleration detection value from being input to the correction circuits 102, 112, and 122, and thereby allows the driving control to be performed based only on the position information from the position sensor 20 and the velocity information from the velocity sensor 22. Alternatively, the control may be performed based only on either the position information or the velocity information.

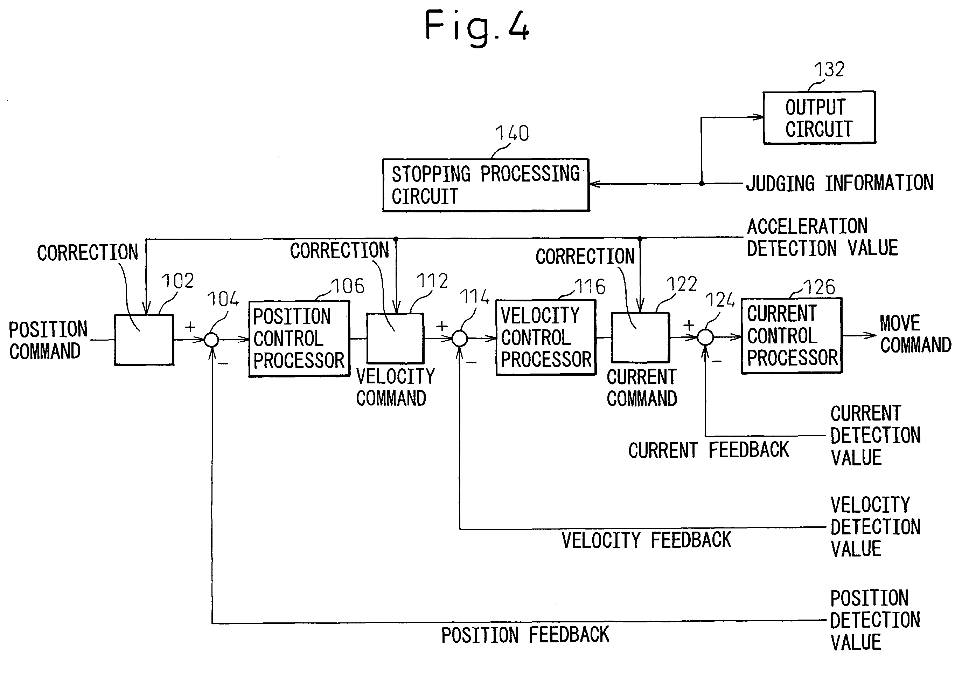

Figure 4 is a block diagram showing the details of the signal processing performed within the apparatus main unit in another embodiment of the driving control apparatus according to the present invention. As in the processing shown in Figure 2, this embodiment also comprises three feedback control loops, that is, the position control loop, the velocity control loop, and the current control loop; here, the same component elements as those described above are designated by the same reference numerals, and the description of such component elements will not be repeated herein.

In this embodiment, the abnormality judging circuit 130 in Figure 3 is not provided within the control apparatus main unit 100, but is provided within the circuit of the acceleration sensor 26. That is, the abnormality judging circuit is formed on the same circuit on which the acceleration detection circuit is formed. The circuit is configured to transmit the abnormality judging information from the acceleration sensor 26 to the signal processing circuit in the control apparatus main unit 100.

More specifically, when power is turned on, with the driven part 12 left stationary, the abnormality judging circuit contained in the acceleration sensor 26 judges the presence or absence of abnormality based on the detection value of the acceleration sensor itself by checking whether the Earth's gravitational acceleration is detected normally and whether the acceleration sensor is mounted correctly with respect to the direction of gravity. The specific calculation method for judging the presence or absence of an abnormality is the same as that described in the foregoing embodiment.

If the judging information indicating that there is abnormality in the operation or the mounting direction of the acceleration sensor 26 is transmitted from the acceleration sensor 26 to the control apparatus main unit 100, the abnormality information output circuit 132 displays the state of the abnormality. Further, in this embodiment, when the judging information is received, a stopping processing circuit 140 performs processing to stop the driving of the driven part 12 by the motor 10 in order to ensure safety.

The invention may be embodied in other specific forms without departing from the spirit or essential characteristics thereof. The present embodiment is therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A driving control apparatus for controlling operation of a driven part (12) via a driving device (10), **characterized in that** said driving control apparatus comprises:
position or velocity detecting means (20, 22) for detecting position or velocity of said driven part (12);
acceleration detecting means (26), mounted on said driven part (12), for detecting acceleration of said driven part (12) separately from said position or velocity detecting means (20, 22); and
judging means (130) for judging, based on acceleration information from said acceleration detecting means (26), the presence or absence of an abnormality in the operation of said acceleration detecting means (26) or the mounting thereof with respect to said driven part (12).

2. A driving control apparatus as claimed in claim 1, **characterized in that** said judging means (130) is included in a signal processing circuit provided within a driving control apparatus main unit (100).

3. A driving control apparatus as claimed in claim 1, **characterized in that** said judging means (130) is formed on the same circuit on which said acceleration detecting means (26) is formed.

4. A driving control apparatus as claimed in claim 1, **characterized in that** said driving control apparatus further comprises notifying means (132) for notifying an operator by outputting information concerning said abnormality based on judging information supplied from said judging means (130).

5. A driving control apparatus as claimed in claim 1 **characterized in that**, when judging information from said judging means (130) indicates the presence of an abnormality, the operation of said driven part (12) is controlled, without using the acceleration information from said acceleration detecting means (26), based on the position or velocity detected by said position or velocity detecting means (20, 22).

6. A driving control apparatus as claimed in claim 1 **characterized in that**, when judging information from said judging means (130) indicates the presence of an abnormality, the operation of said driven part (12) is stopped.

7. A driving control apparatus as claimed in claim 1, **characterized in that** said acceleration detecting means (26) detects accelerations X, Y, and Z in three mutually perpendicular axes, and said judging means (130) judges that there is an abnormality if the value of any one of said accelerations X, Y, and Z is outside a predetermined range.

8. A driving control apparatus as claimed in claim 1, **characterized in that** said acceleration detecting means (26) detects accelerations X, Y, and Z in three mutually perpendicular axes, and said judging means (130) performs a calculation (X² + Y² + Z²)^{1/2} using the values of said accelerations, and judges that there is an abnormality if a value obtained from said calculation is outside a predetermined range.

9. A driving control apparatus as claimed in claim 1, **characterized in that** said acceleration detecting means (26) detects accelerations X, Y, and Z in three mutually perpendicular axes, and said judging means (130) performs a calculation X + Y + Z using the values of said accelerations, and judges that there is an abnormality if a value obtained from said calculation is outside a predetermined range.

10. A driving control apparatus as claimed in claim 1, **characterized in that** said judging means (130) averages calculated values obtained by performing a prescribed calculation using output values of said acceleration detecting means (26) over a predetermined period of time, and judges that there is an abnormality if an average value obtained by said averaging is outside a predetermined range, or said judging means (130) judges that there is an abnormality if a condition in which a value obtained by performing a prescribed calculation using output values of said acceleration detecting means (26) is outside a predetermined range has continued for more than a predetermined length of time.
